# EUROPEAN PATENT APPLICATION

(11) **EP 4 455 478 A1**
(43) Date of publication of application: **30.10.2024**
(21) Application number: 23170021.2
(22) Date of filing: 26.04.2023
(51) Int. Cl.: F03D 9/19, F03D 13/10, C25B 1/04

(54) **GUIDE MEANS FOR INSTALLING AN ELECTROLYZER CONTAINER ON A PLATFORM SURFACE CONNECTED TO A WIND TURBINE**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

The present invention relates to guide means (10) to aid the positioning of an electrolyzer container (9) on a platform (6) connected to a wind turbine (1), wherein the guide means (10) comprises at least one member (20, 40) having a length extending in a direction substantially parallel to a placement direction and adapted to guide container (7) into a predefined position.

The present invention further relates to the method to install the container guided by the guide means (10).

## Description

### FIELD OF THE INVENTION

The invention relates to a means and a method to ensure a correct positioning of an electrolyzer container on a predefined position on a platform connected to a wind turbine.

### BACKGROUND OF THE INVENTION

Using offshore wind turbines in power-to-X to run for example hydrogen production plants offer many benefits, such as quick supply of water, good wind conditions. The positioning of the turbines further lowers the risk of being at nuisance to inhabitants in the local area.

There are however also disadvantages. One major drawback is the relatively harsh environmental conditions of the ocean.

Often the production plants for generating hydrogen are positioned at a platform in connection with or close to the wind turbine. The production plant is connected to means for the exchange of fluids and gasses, and for the supply of electrical power from the wind turbine.

The tower of the wind turbine often is equipped with a platform adapted for a plural of containers each comprising one or more electrolyzers. To optimize please usage some of the containers may be packed close to neighboring containers.

This however generates a problem during the installation, removal and/or replacement of the containers. This usually usu done by a crane, where the container when moved is hanging from the crane by wires. The container may swing slightly e.g. under influence of wind, or waves affecting a ship carrying the crane. Since the containers may be packed relatively tight, container may collide with a neighboring container.

The problem extends to when ensure the positioning of the containers on the platform. Due to such unstable operational conditions. it may be difficult to direct the container into the correct position under narrow tolerances, like distance to neighboring containers. Tight or narrow tolerances could also be due to the position on the platform 6 surface adapted for the container, this could include means such as for stabilizing and/or fixating the container. A correct positioning therefore could be critical.

### SUMMARY OF THE INVENTION

The object of the invention is to solve the above problems, and this is achieved by the independent claims. The dependent claims describe advantageous developments and modifications of the invention.

In accordance with the invention there is provided guide means to aid the positioning of an electrolyzer container on a platform connected to a wind turbine, wherein the guide means comprises at least one member having a length extending in a direction substantially parallel to a placement direction and adapted to guide container into a predefined position.

The predefined position could be formed at the surface of the platform and may comprise means for securing and connecting the container to the platform.

The placement direction is defined direction given by a line parallel to a path of the container to the position, such as perpendicular to the platform surface.

The guide means may comprise at least two members adapted to form a contact at two separate positions during positioning of the container.

The contact could be of the guide means to the container, or to the surface of the predefined position, and/or could include contacting the container at different position and/or at different positions at the predefined position.

The at least two members may have lengths or is positioned such that they will form a contact at different heights relative to the surface of the predefined position.

The guide means may comprise at least two first kind members having a longitudinal length and forming first sections adapted to be positioned substantially parallel to the placement direction of the container during positioning and to other first kind member first sections.

The first kind members may form second sections with a sloping or curving side facing adapted contact the outer surface of the container and being non-parallel to the placement direction.

The first kind members may be longer than the height of the container, such that when the container is in position the first kind members reach above the container.

The first sections may have lengths being at least the height of the container, such that when the container is in position the second sections is positioned above the container.

The first guides may include mounting at least one first guide on the platform surface, and at least one first guide on the top of a neighboring container.

In an embodiment the guide means comprises second kind guide including at least one first parts adapted to be positioned in connection with the container, and a second member adapted to be positioned in connection with the surface, wherein the first member is adapted to interact with the second member during positioning.

The first part may be positioned in connection with the container such that they reach the second part before the container during positioning.

The second kind guide may include at least two first parts.

The second member may comprise at least two openings and the at least two first parts comprise elongated bodies projecting from a container surface, and where the elongated bodies are adapted to engage with the openings.

The openings may have tapered inlets.

The first parts and second parts may comprise means for locking them together when the container is in position.

The present invention further relates to a method to install a container on a platform connected to a wind turbine, the method including to lift the container to a height above a predefined position and use the means according to any of the previous embodiments to guide the container onto the predefined position.

Before starting the installation, guide means may be installed for the guidance, the be removed after installation.

The respective lengths and positions of the platform mounted first guides and the container placed first guides thus is adapted to contact the container at different heights, and/or positions.

The respective individual lengths of the second kind guides first parts also are adapted to contact the container at different heights, and/or positions.

The respective first guides and second guide first parts further will contact the container at different heights, and/or positions.

### BRIEF DESCRIPTION OF THE DRAWINGS

Embodiments of the invention are now described, by way of example only, with reference to the accompanying drawings, of which:
- Figure 1: shows a wind turbine adapted to power electrolyzers;
- Figure 2: shows platform connected to the wind turbine tower and with a plural of electrolyzer containers;
- Figure 3: shows first kind guides mounted on the platform surface to guide the electrolyzer container to a pre-defined position on the platform surface;
- Figure 4: shows first kind guides being mounted respectively on the platform surface and on a neighboring container;
- Figure 5: shows second kind guides formed of a first part and second part;
- Figure 6: shows the first part and second part locked together.

The illustration in the drawings is in schematic form. It is noted that in different figures, similar or identical elements may be provided with the same reference signs.

### DESCRIPTION OF THE DRAWINGS

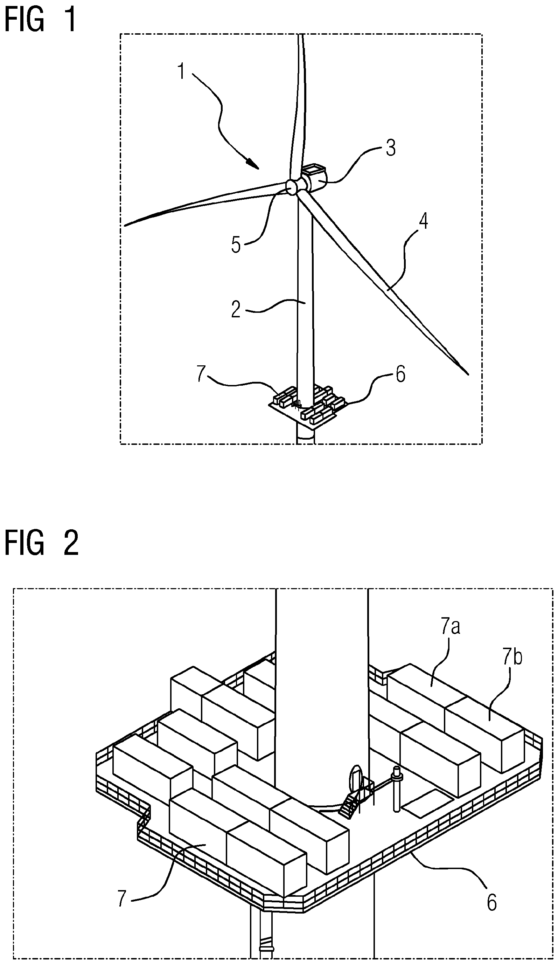

**Figure 1** shows an embodiment wind turbine 1 positioned in the water, such as the ocean. The wind turbine 1 comprises a tower 2 mounted on a non-depicted fundament. A nacelle 3 is arranged on top of the tower 2. The wind turbine 1 further comprises a wind rotor 5 having two, three or more blades 4 (in the perspective of Figure 1 only two blades 4 are visible). The wind rotor 5 is rotatable around a longitudinal rotation axis. The wind turbine 1 comprises an electric generator.
In the illustrated embodiment a platform 10 is positioned at the tower 2. The position of the platform 10 at the tower 2 could be such that it is generally above water despite waves and tides.

The platform 6 is adapted for containers 7 to be positioned and optionally fixed on its surface. In a non-exclusive manner the containers 7 could comprise operational parts such as electrolyzers for a hydrogen production plant, but could be other systems e.g., CO2 extraction machines. In the following the containers 7 are exampled as comprising hydrogen producing plants.

**Figure 2** shows the platform 6 with a plural of containers 7, where some are positioned close to other containers 7, such as seen for the two containers neighboring 7a, 7b closely, or tightly together. Some of the containers 15, 7a, 7b may be positioned in rows with passages in-between for servicing.

The installation, removal and/or replacement of the containers 7 usually is done by a crane, where the container 7 when moved is hanging from the crane by wires. The container 7 may swing slightly e.g. under influence of wind, or waves affecting a ship carrying the crane. Since the containers 7 may be packed relatively tight, container 7 may collide with a neighboring container 7a, 7b.

The problem extends to when ensure the positioning of the containers on the platform. Due to such unstable operational conditions. it may be difficult to direct the container 7 into the correct position under narrow tolerances, like distance to neighboring containers 7a, 7b. Tight or narrow tolerances could also be due to the position on the platform 6 surface adapted for the container 7, this could include means such as for stabilizing and/or fixating the container 7. A correct positioning therefore could be critical.

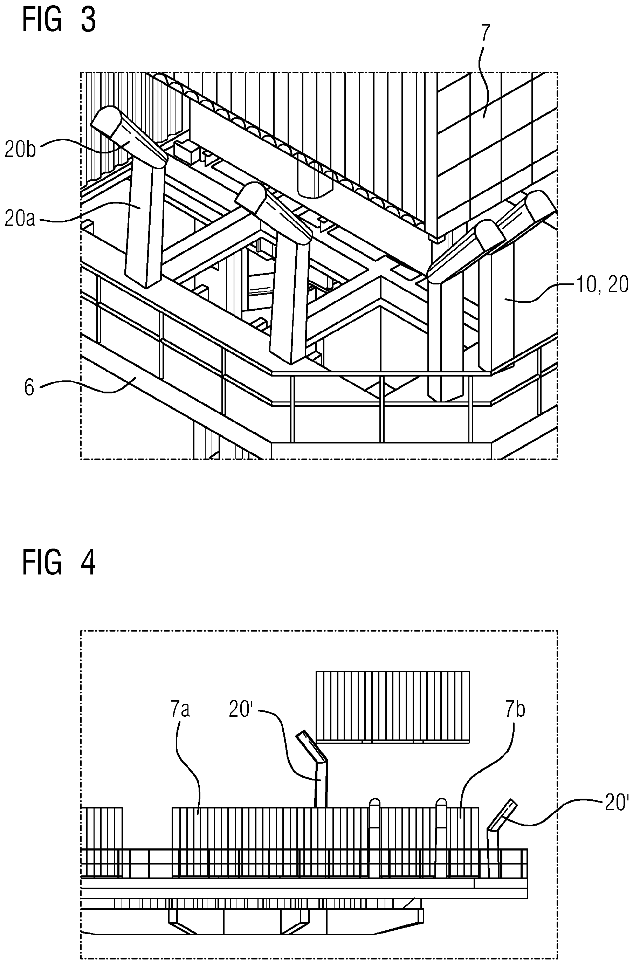

**Figure 3** shows a solution, where guiding means 10, 20 are installed relative to the position to direct the container 7, such as at the surface of the platform 6.

In the illustrated embodiment the guiding means 10, 20 comprise at least one first kind guide 20 having a longitudinal length and forming a first section 20a.

Defining a placement direction as a line parallel to a path of the container 7 to the position, such as perpendicular to the platform 6 surface, the first section 20a then could be positioned substantially parallel to the placement direction. In case of a plural of first kind members, they then could be positioned with parallel first sections 20a.

The first kind guides 20 are adapted to be placed at the circumference of the position and may be beam-like structures as illustrated.

->The first kind guides 20 in an embodiment are removable, only to be positioned during inserting or removing a container 7. the platform 6 surface having placing means (not illustrated) adapted for the first sections 20a to be attached e.g. on the platform 6 surface. The coupling means for attaching the first sections 20a could be such that only one orientation of placement of the first kind guides 20 are possible. In one embodiment, this is simple openings into inner hollows formed in the platform 6 surface adapted to match the end part of the first sections 20a, and where the shape of the openings and at least the end part of the first sections 20a, are such that they only match at one orientation of placing.

When a new container 7 is to be installed and/or an old to be removed, the first kind guides 20 then are placed in position to be removed once finished, thus allowing them to be used for installing or removing another container 7.

The first kind guides 20 may further form second sections 20b with a sloping or curving and un-parallel side relative to the placement direction, this side is adapted to contact the outer surface of the container 7 for guiding.

In the illustrated embodiment the second sections 20b simply is formed by an outwards bending of the first kind guide 20 upper section, where outwards are seen relative to the position.

To ensures guiding of the container 7 from all sides, in an embodiment at least one, or two or more first kind member 20 is positioned at each side of the position. In this embodiment, the second sections 20b then is formed such, that when mounted at the circumference of the position, then seen from above, or from the incoming container's 7 perspective, the plural of first kind members 20 appear almost funnel-like shaped with a wide, or taper-shaped, inlet formed by the second sections 20b leading to a narrower section formed by the first sections 20a. This 'funnel' then helps guiding the incoming container 7 directly to the position.

The individual first kind guides 20 will not contact each other when mounted at the circumference of the position, there thus being space in-between. They may have a thickness substantially smaller than at least some of the gaps between them. The funnel-shape they form thus is a kind of a 'broken' funnel, which however will fully operate to 'funnel' the container 7 if the gaps between the first kind guides 20 are significantly smaller than the respective dimensions of the container 7.

Naturally, when the container 7 is to be lifted for removal, the guide means 10, 20 operate in the same manner, just reversing the moving direction of the container 7. The first kind guides 20 will be positioned in the same manner, the first sections 20a adapted to guide the container 7 from the position towards the wider area defined by the second sections 20b.

The first kind guides 20 as illustrated may be longer than the height of the containers 7, such that when a container is positioned, they reach above the it's roof. This could be the first sections 20a being at least the length of the height of the containers 7, the second sections 20b thus reaching above the positioned container 7. This helps to prevent contacting closely positioned neighboring containers 7a, 7a as the 'wide part' of the first kind guides 20, the outer part of the 'funnel', will be above container 7 tops. Further it simply guides over a full height of the containers 7.

For positions where containers are close, like the two neighboring containers 7a, 7b in figure 1, if the container to be positioned or removed is either, e.g. container 7a, then due to the closeness of the neighboring container 7b, there may not be space to mount first kind guides 20, just as there is not much space of operation in this direction for the e.g. installation.

**Figure 4** shows an embodiment solution to the problem, where rather than placing all the first kind guides 20 on the platform 6 surface, some 20' are attached to the neighboring container 7b, such as to the container 7b top, or roof.

These top installed first kind guides 20' may be specially designed or be the same as to the surface mounted first kind guides 20. By using the same first kind of first guides 20, 20' being mounted respectively on the platform 6 surface and the neighboring container 7b simplifies the mounting and manufacture of first kind guides 20, 20'. In either case they may reach above the platform mounted first kind guides 20, the respectively platform mounted first kind guides 20 reaching at a first distance to the position, and the container mounted first kind guides 20' reaching to a second distance to the position. The first and second distances then are different, and the second distance thus may be larger than the first distance.

The container first kind guides 20' may reach out from the container top towards the position of the container 7, 7a to be installed or removed, such that a small gap safety is ensured.

The neighboring container 7b thus is equipped with means for mounting the container first kind guides 20', which could be like the means for mounting the platform mounted first kind guides 20. These means could form an integrated part of the container 7b, or could be positioned before mounting the container first kind guides 20'.

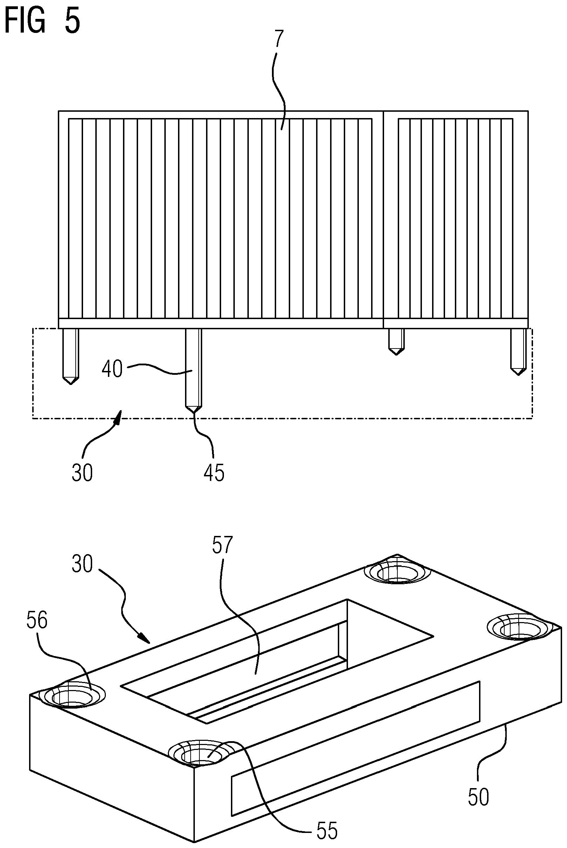

**Figure 5** shows second kind guides 30 including at least two parts 40, 50. The first part 40 is adapted to be positioned in connection with the container 7, such as to the container 7 bottom, and a second part 50 adapted to be poisoned in connection to the platform 6 surface. Either may be fixed to the respective container 7 and surface by welding, bolting etc.

The first members 40 are adapted to interact with the second member 50 during positioning of the container 7.

The first part 40 members may comprise elongated bodies adapted to project out from a container 7 bottom, or any suitable surface thereof, and may essentially be pin-shaped and have pointed ends 45.

The second member 50 may define the position for the container 7 and may be formed as a plateau positioned on the platform 6 surface. It may comprise openings 55 adapted to form the interaction with the first members 40. To assist the guiding the openings 55 may have tapered inlets 56.

The tapered inlets 56 makes it easier for the openings 55 to catch the pointed ends 45 of the first part 40 members.

During installation of the container 7, as it is lifted to the position, possible guided by the first kind means 20, the first members 40 engages with the second member 50 before the container 7 reaches the surface of the position, e.g. the upper surface of the second member 50, and assist in guiding to the correct position.

Both to ensure the correct orientation of the container 7, and to have the individual first members 40 engage with an opening 55 one, or a few, at a time, they have different lengths. In the illustrated embodiment all has different lengths, and thus engage one at a time. This means when above the position the individual first members 40 will be at separate distances relative to the position surface along the placement direction.

The inner of the openings 55 may be formed with a surfaced e.g. of Teflon or a similar material. When the container 7 has been installed e.g. for years under harsh conditions such as at the ocean, this will ease the later demounting and removal of the container 7.

The illustration shows four first members 40 and correspondingly four openings 55, but any number would apply to the present invention. There could also be only one respectively first member 40 and opening 55.

In the illustration the second part 50 is seen having an inner volume 57.

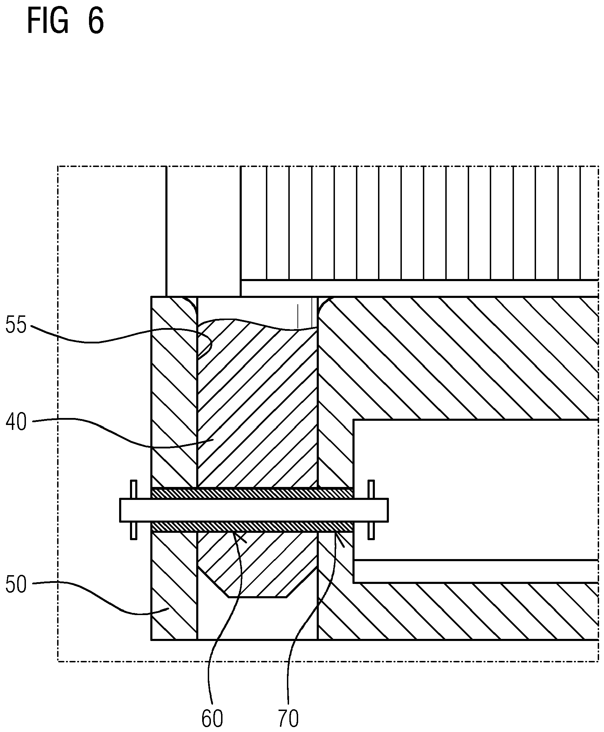

**Figure 6** illustrated a further embodiment, where the first members 40 and second member 50 comprise means for locking them together when the container 7 is in position.

In the illustrated embodiment this is formed by locking openings 60, 70 in respectively at least one first part 40 and the second part 50. The locking is then ensured when the respective first part 40 locking opening 60 matches the second part 50 locking opening 70. The matching may be ensured automatically when the container 7 is in position, such as when it rests with its bottom surface on the upper surface of the second member 50.

The locking openings 60 may be bores partly or fully penetrating the first parts 40. Similarly, the locking openings 70 may include bores reaching from the externals to the inner of the openings 55, and/or bores reaching from the inner volume 57 to the inner of the openings.

When the container 7 is in position the bores of the respective locking openings 60, 70 then matches enabling the locking e.g. by a bolt or screw.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Guide means (10) to aid the positioning of an electrolyzer container (9) on a platform (6) connected to a wind turbine (1), wherein the guide means (10) comprises at least one member (20, 40) having a length extending in a direction substantially parallel to a placement direction and adapted to guide container (7) into a predefined position.

2. Guide means (10) according to claim 1, comprising at least two members (20, 40) adapted to form a contact at two separate positions during positioning of the container (7),

3. Guide means (10) according to claim 1 or 2, wherein at least two members (20, 30) has lengths or is positioned such that they will form a contact at different heights relative to the surface of the predefined position.

4. Guide means (10) according to claim 2 or 3, wherein the guide means (10) comprise at least two first kind members (20) having a longitudinal length and forming first sections (20a) adapted to be positioned substantially parallel to the placement direction of the container (7) during positioning and to other first kind member (20) first sections (20a).

5. Guide means (10) according to claim 4, wherein the first kind members (20) forms second sections (20b) with a sloping or curving side facing adapted contact the outer surface of the container and being non-parallel to the placement direction.

6. Guide means (10) according to claim 4 or 5, wherein the first kind members (20) are longer than the height of the container (7), such that when the container is in position the first kind members (20) reach above the container.

7. Guide means (10) according to claim 6, wherein the first sections (20a) have lengths being at least the height of the container (7), such that when the container (7) is in position the second sections (20b) is positioned above the container (7).

8. Guide means (10) according to any of the claims 4-7, wherein the first guides (20) include mounting at least one first guide (20) on the platform (6) surface, and at least one first guide (20') on the top of a neighboring container (7b) .

9. Guide means (10) according to any of the preceding claims, wherein the guide means (10) comprise second kind guide (30) including at least one first parts (40) adapted to be positioned in connection with the container (50), and a second member (50) adapted to be positioned in connection with the surface, wherein the first member (40) is adapted to interact with the second member (50) during positioning.

10. Guide means (10) according to claim 9, wherein the first part (40) is positioned in connection with the container such that they reach the second part (50) before the container during positioning.

11. Guide means (10) according to claim 9 or 10, wherein the second kind guide (30) includes at least two first parts (40) .

12. Guide means (10) according to claim 9, 10 or 11, wherein the second member (50) comprises at least two openings (55) and the at least two first parts (40) comprise elongated bodies projecting from a container (7) surface, and where the elongated bodies (40) are adapted to engage with the openings (55) .

13. Guide means (10) according to claim 12, wherein the openings (55) have tapered inlets (56).

14. Guide means (10) according to any of claims 9-13, wherein the first parts (40) and second parts (50) comprise means (60, 70) for locking them together when the container is in position.

15. Method to install a container (7) on a platform (6) connected to a wind turbine (1), the method including to lift the container (7) to a height above a predefined position and use the means according to any of the claims 1-12 to guide the container (7) onto the predefined position.
